# EUROPÄISCHE PATENTSCHRIFT

(11) **EP 1 194 798 B1**
(45) Veröffentlichungstag und Bekanntmachung des Hinweises auf die Patenterteilung: **27.06.2007**
(21) Anmeldenummer: 01951536.0
(22) Anmeldetag: 30.05.2001
(51) Int. Cl.: G02B 5/23

(54) **PHOTOCHROMER KUNSTSTOFFGEGENSTAND MIT PERMANENT GESTEIGERTEM KONTRAST**
PHOTOCHROMIC PLASTIC OBJECT WITH PERMANENTLY INCREASED CONTRAST
OBJET PHOTOCHROME EN PLASTIQUE A CONTRASTE INTENSIFIE DE MANIERE PERMANENTE

(30) Priorität: 30.05.2000 DE 10026717
(43) Veröffentlichungstag der Anmeldung: 10.04.2002
(73) Patentinhaber: Rodenstock GmbH, 80469 München (DE)
(72) Erfinder: SOMMER, Hans-Peter, 80999 München (DE); VÖGT, Michael, 82205 Gilching (DE); SCHERG, Gerd-Peter, 85598 Baldham (DE); MELZIG, Manfred, 82234 Wessling (DE)
(74) Vertreter: Müller-Boré & Partner Patentanwälte
(86) Internationale Anmeldenummer: PCT/EP2001/006158
(87) Internationale Veröffentlichungsnummer: WO 2001/092926

(56) Entgegenhaltungen:
- EP-A- 0 355 672
- WO-A-00/05602
- WO-A-00/18569
- DE-A- 3 534 276
- DE-A- 4 240 836
- DE-A- 4 422 663
- US-A- 3 406 085
- US-A- 5 753 146
- US-A- 5 922 246
- PATENT ABSTRACTS OF JAPAN vol. 1995, no. 02, 31. März 1995 (1995-03-31) & JP 06 324293 A (DAISERU AMIBOSHI SANGYO KK)
- PAMPALONE ET AL.: "Contrast Enhancing Additives for Positive Photoresists" JOURNAL OF THE ELECTROCHEMICAL SOCIETY, Bd. 135, Nr. 2, Februar 1988 (1988-02), Seiten 471-476, XP000073199 Manchester, NH
- B. LINGELBACH: DEUTSCHE OPTIKERZEITUNG, Bd. 12, 1990, Seiten 43-51, XP009034820

## Beschreibung

Die vorliegende Erfindung betrifft einen photochromen Kunststoffgegenstand, der sich gegenüber den im Stand der Technik verfügbaren photochromen Kunststoffgegenständen durch einen permanent gesteigerten Kontrast auszeichnet, d.h. der erfindungsgemäße photochrome Kunststoffgegenstand zeigt in den stationären Zuständen und in jeder Phase sowohl während der Eindunkelung als auch der Aufhellung einen erhöhten Kontrast. Der erfindungsgemäße Kunststoffgegenstand kann insbesondere als photochromes Brillenglas, vorzugsweise für Sportbrillen, verwendet werden.

Photochrome Kunststoffprodukte, insbesondere Brillengläser, sind seit den 80er Jahren auf dem Markt. Die ersten Gläser, die größere Verbreitung fanden, z.B. Rodenstock Perfalit Colormatic (seit 1986) oder das von Transitions Optical Inc. (seit 1990) eingefärbte, von mehreren Glasherstellern angebotene Transitions Glas, enthielten Spirooxazine als photochrome Farbstoffe, welche in blauen Farbtönen eindunkelten. Spätere Produkte, wie das "graue" Transitions Plus-Glas (seit 1992), oder die braunen Gläser Transitions Eurobraun und Hoya Sunbrown (seit 1994) oder das Rodenstock-Glas Perfalit ColorMatic neu (seit 1995) enthielten Pyrane neben Spirooxazinen und/oder Fulgiden. Die derzeitig im Handel erhältlichen Produkte, wie das Glas Transitions III, verwenden bevorzugt Pyrane, speziell Naphthopyrane und von diesen abgeleitete größere Ringsysteme. Die Transitions III Produkte mit dem Brechungsindex 1,56 finden ihre Grundlage dabei in US 5,753,146.

Den derzeit im Stand der Technik verfügbaren Gläsern ist gemeinsam, dass sie aufgrund der beleuchtungsabhängigen Eindunkelung der photochromen Farbstoffe keinen zufriedenstellenden Kontrast zeigen.

Der vorliegenden Erfindung liegt somit die Aufgabe zugrunde, einen photochromen Kunststoffgegenstand bereitzustellen, der sich durch einen permanent gesteigerten Kontrast auszeichnet, d.h. der photochrome Kunststoffgegenstand soll in den stationären Zuständen und in jeder Phase sowohl während der Eindunkelung als auch der Aufhellung einen erhöhten bzw. gesteigerten Kontrast liefern. Der erfindungsgemäße Kunststoffgegenstand soll sich dabei insbesondere als photochromes Brillenglas, beispielsweise für Sportbrillen, eignen.

Diese Aufgabe wird durch die in den Ansprüchen gekennzeichneten Ausführungsformen gelöst.

Insbesondere wird ein photochromer Kunststoffgegenstand bereitgestellt, der ein transparentes Kunststoffmaterial und darin eingebracht mindestens einen photochromen Farbstoff umfasst, wobei der photochrome Kunststoffgegenstand weiter mindestens ein den Kontrast steigerndes Mittel (kontraststeigemdes Mittel) aufweist, das im Bereich des sichtbaren Lichts von 380 nm bis 500 nm derart absorbiert, daß der photochrome Kunststoffgegenstand im aufgehellten Zustand des mindestens einen photochromen Farbstoffs eine mittlere Transmission im Bereich des sichtbaren Lichts von 380 nm bis 500 nm von mindestens 5 % bis höchstens 30 % zeigt, wobei das den Kontrast steigernde Mittel ein Farbstoff ist, ausgewählt aus der Gruppe, bestehend aus organischen Farbstoffen und Pigmenten, oder als eine reflektierende Beschichtung oder als eine absorbierende Beschichtung ausgebildet ist oder eine Kombination von zwei oder mehreren davon ist. Mit anderen Worten, der erfindungsgemäße photochrome Kunststoffgegenstand zeigt im aufgehellten Zustand des mindestens einen photochromen Farbstoffs eine Reduktion der mittleren Transmission im Bereich des sichtbaren Lichts von 380 nm bis 500 nm um mindestens 70 %.

Vorzugsweise zeigt der photochrome Kunststoffgegenstand im aufgehellten Zustand des mindestens einen photochromen Farbstoffs eine mittlere Transmission im Bereich des sichtbaren Lichts von 380 nm bis 500 nm von höchstens 20 %, mehr bevorzugt von höchstens 10%.

Der erfindungsgemäße photochrome Kunststoffgegenstand zeichnet sich durch einen permanent erhöhten bzw. gesteigerten Kontrast aus, so daß sich sowohl in den stationären Zuständen als auch während der durch den photochromen Farbstoff hervorgerufenen Eindunkelungs- sowie der Aufhellungsphase des photochromen Kunststoffgegenstands ein erhöhter Kontrast einstellt. Dies kann insbesondere auf einer entsprechenden Absorption des kontraststeigernden Mittels im Bereich des sichtbaren Lichts von 380 nm bis 500 nm beruhen, wodurch die kurzwelligen, blauen Anteile des einfallenden Lichts im wesentlichen herausgefiltert werden. Aufgrund der Tatsache, dass der Kontrast zwischen zwei Objekten als das Verhältnis von der Differenz zur Summe von zwei Leuchtdichten L_{I} und L_{II} definiert ist und die Leuchtdichte von blauem Streulicht vernachlässigbar gering ist, ist ein Kontrastgewinn eigentlich nicht objektiv meßbar. Im Rahmen der vorliegenden Erfindung wird jedoch unter Kontraststeigerung die subjektive Empfindung verstanden, wie in DOZ (Deutsche Optikerzeitung), 12/90, Seite 43 ff., beschrieben.

In dem erfindungsgemäßen photochromen Kunststoffgegenstand werden die kurzwelligen, blauen Anteile des einfallenden Lichts nicht vollständig herausgefiltert, da sonst eine unerwünschte Farbverfälschung, d.h. eine Verfälschung des farbtreuen Sehens hervorgerufen werden würde. Der photochrome Kunststoffgegenstand weist im aufgehellten Zustand des mindestens einen photochromen Farbstoffs daher eine mittlere Transmission im Bereich des sichtbaren Lichts von 380 nm bis 500 nm von mindestens 5 % auf. Ein Restlicht in diesem Spektralbereich ist erforderlich, um ein weitgehend farbtreues Sehen zu erreichen.

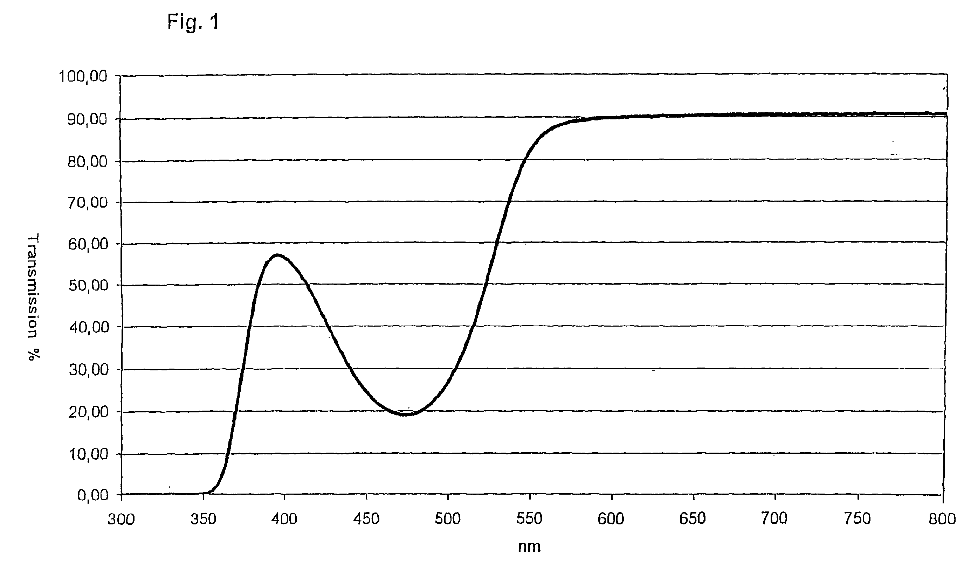

Fig. 1 zeigt die Transmissionskurve des Farbstoffs Celliton orange R, vertrieben von BASF, im Kunststoffmaterial CR 39 (Handelsname von Diethylenglykolbisallylcarbonat, vertrieben von PPG Industry).

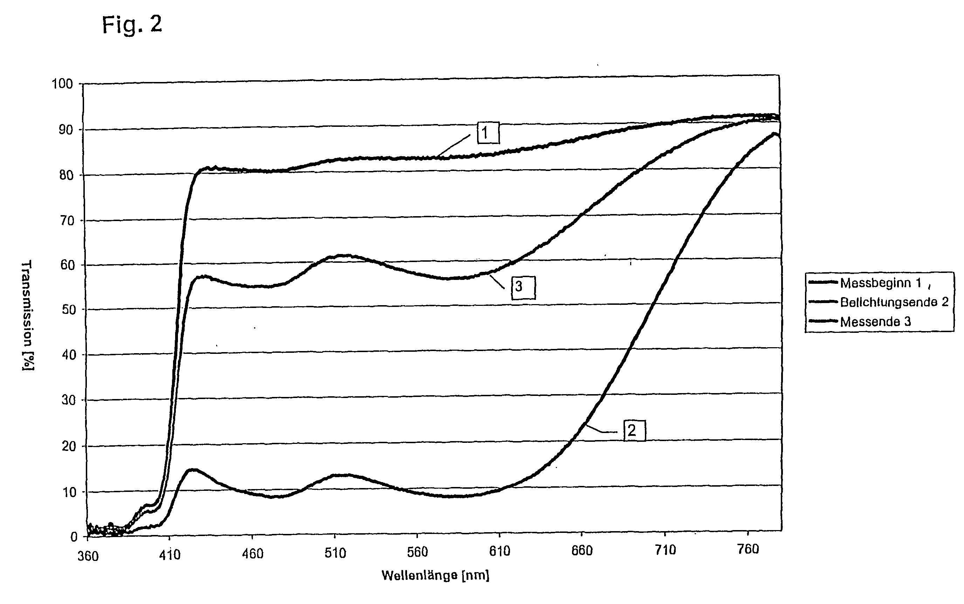

Fig. 2 zeigt die Transmissionskurve für ein im Handel erhältliches photochromes bzw. phototropes Kunststoffglas (Rodenstock ColorMatic Extra grey) ohne die erfindungsgemäße Verwendung eines kontraststeigernden Mittels. Die Transmission wurde dabei während der Belichtung und der Aufhellung aufgezeichnet. Die Belichtungszeit betrug 15 Minuten, wobei die Bestrahlung mit 50 klux gemäß EN 1836 Punkt 6.1.3.1.1 erfolgte. Die Aufhellung fand im Dunkeln statt.

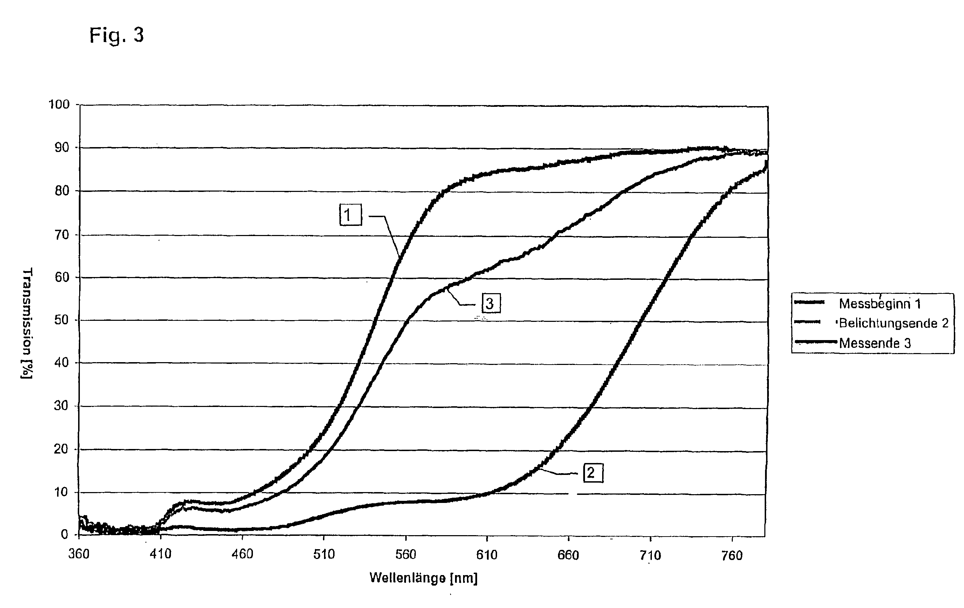

Fig. 3 zeigt die Transmissionskurve für einen erfindungsgemäßen photochromen Kunststoffgegenstand in Form eines phototropen Glases, wie in dem nachstehend angeführten Beispiel hergestellt. Die Transmission wurde dabei während der Belichtung und der Aufhellung aufgezeichnet. Die Belichtungszeit betrug 15 Minuten, wobei die Bestrahlung mit 50 klux gemäß EN 1836 Punkt 6.1.3.1.1 erfolgte. Die Aufhellung fand im Dunkeln statt.

Der erfindungsgemäße photochrome Kunststoffgegenstand eignet sich insbesondere als photochromes Brillenglas, beispielsweise für Sportbrillen wie z.B. Skibrillen. Darüberhinaus kann der erfindungsgemäße photochrome Kunststoffgegenstand selbstverständlich auch für Brillengläser aller Art, wie Motorradbrillen und Schutzbrillen, oder für Schutzhelmvisiere, Schutzblenden, Fenster, Abdeckungen, Dächer und dergleichen verwendet werden.

Als transparentes Kunststoffmaterial, das insbesondere als Träger bzw. Matrix für den bzw. die einzusetzenden photochromen Farbstoff(e) dient, enthält der erfindungsgemäße Kunststoffgegenstand ein oder mehrere Kunststoffmaterialien. Die verwendbaren Kunststoffmaterialien können die im Stand der Technik üblicherweise, insbesondere für ophthalmische Zwecke verwendbaren Kunststoffe sein. Beispielsweise kann das Kunststoffmaterial aus Poly(C₁-C₁₂-alkyl)methacrylaten, Polyoxyalkylenmethacrylaten, Polyalkoxyphenolmethacrylaten, Celluloseacetat, Cellulosetriacetat, Celluloseacetatpropionat, Celluloseacetatbutyrat, Polyvinylacetat, Polyvinylalkohol, Polyvinylchlorid, Polyvinylidenchlorid, Polycarbonaten, Polyestern, Polyurethanen, Polyethylenterephthalat, Polystyrol, Poly-α-methylstyrol, Polyvinylbutyral, Copoly(styrol-methylmethacrylat), Copoly(styrolacrylnitril) und Polymeren aus Bestandteilen der Gruppe, bestehend aus Polyol(allylcarbonat)monomeren, polyfunktionalen Acrylat-, Methacrylat- oder Diethylenglykoldimethacrylatmonomeren, ethoxylierten Bisphenol-A-dimethacrylatmonomeren, Diisopropenylbenzolmonomeren, Ethylenglykolbismethacrylatmonomeren, Poly(ethylenglykol)bismethacrylatmonomeren, ethoxylierten Phenolmethacrylatmonomeren, alkoxylierten Polyalkoholacrylatmonomeren und Diallylidenpentaerythritmonomeren oder Gemischen davon, ausgewählt sein.

Insbesondere kann das Kunststoffmaterial ein festes, transparentes Homo- oder Copolymer sein, ausgewählt aus der Gruppe, bestehend aus Poly(methylmethacrylat), Poly(ethylenglykolbismethacrylat), poly(ethoxyliertem Bis-phenol-A-dimethacrylat), thermoplastischem Polycarbonat, Polyvinylacetat, Polyvinylbutyral, Polyurethan oder ein Polymer, ausgewählt aus den Bestandteilen der Gruppe, bestehend aus Diethylenglykolbis(allylcarbonat)monomeren, Diethylenglykoldimethacrylatmonomeren, ethoxylierten Phenolmethacrylatmonomeren, ethoxylierten Düsopropenylbenzolmonomeren und ethoxylierten Trimethylolpropantriacrylatmonomeren.

Die für die vorliegende Erfindung verwendbaren photochromen Verbindungen unterliegen keiner spezifischen Beschränkung. Vorzugsweise können sie aus der Klasse der Benzopyrane und höherer, davon abgeleiteter annellierter Ringsysteme, wie insbesondere Naphthopyrane oder Fluorenopyrane, ausgewählt werden. So können beispielsweise in 2,2-Stellung aromatisch bzw. heteroaromatisch substituierte [2H]-Naphtho(1,2-b)-pyrane, aber auch in 3,3 -Stellung entsprechend substituierte [3H]-Naphtho(2,1-b)-pyrane, wie z.B. die in PCT-DE 98/02820 beschriebenen Naphthopyrane und die in PCT/EP 99/05258 beschriebenen Indeno[2,1-f]naphtho[1,2-b]pyranderivate und/oder Spiro-9-fluoreno[1,2-b]pyranderivate verwendet werden. Beispielhaft können hier
3,13-Diphenyl-3-(4-diphenylaminophenyl)-13-hydroxy-6-methoxy-indeno[2,1-f]-naphtho[1,2-b]pyran,
13-(2,5-Dimethylphenyl)-3-(4-diphenylaminophenyl)-13-hydroxy-6-methoxy-3-phenyl-indeno[2,1-f]-naphtho[1,2-b]pyran,
13-(2,5-Dimethylphenyl)-3-(4-diphenylaminophenyl)-13-hydroxy-3-phenyl-indeno[2,1-f]-naphtho[1,2-b]pyran,
Spiro-9-fluoreno-13'-[3-(4-dimethylaminophenyl)-6-methoxy-3-phenyl-indeno[2,1-f]naphtho[1,2-b]pyran],
Spiro-9-fluoreno-13'-[3-(4-dimethylaminophenyl)-3-phenyl-indeno[2,1-f]naphtho-[1,2-b]pyran],
Spiro-9-fluoreno-13'-[3-(4-diphenylaminophenyl)-6-methoxy-3-phenyl-indeno[2,1-f]naphtho[1,2-b]pyran],
Spiro-9-fluoreno-13'-[3-(4-diphenylaminophenyl)-3-phenyl-indeno[2,1-f]naphtho-[1,2-b]pyran],
Spiro-9-fluoreno-13'-{3-[4-(N-morpholinyl)phenyl]-6-methoxy-3-phenyl-indeno[2,1-f]naphtho[1,2-b]pyran},
Spiro-9-fluoreno-13'-{3-[4-(N-morpholinyl)phenyl]-3-phenyl-indeno[2,1-f]naphtho-[1,2-b]pyran},
Spiro-9-fluoreno-13'-{6-methoxy-3-phenyl-3-[4-(N-piperidinyl)phenyl]-indeno[2,1-f]naphtho[1,2-b]pyran} und
Spiro-9-fluoreno-13'-{3-phenyl-3-[4-(N-piperidinyl)phenyl]-indeno[2,1-f]naphtho-[1,2-b]pyran} sowie beispielsweise
3-(4-Diphenylaminophenyl)-3-(2-fluorphenyl)-3H-naphtho[2,1-b]pyran,
3-(4-Dimethylaminophenyl)-3-(2-fluorphenyl)-3H-naphtho[2,1-b]pyran,
3-(2-Fluorphenyl)-3-[4-(N-morpholinyl)phenyl]-3H-naphtho[2,1-b]pyran,
3-(2-Fluorphenyl)-3-[4-(N-piperidinyl)phenyl]-3H-naphtho[2,1-b]pyran,
3-(4-Dimethylaminophenyl)-6-(N-morpholinyl)-3-phenyl-3H-naphtho[2,1-b]pyran,
6-(N-Morpholinyl)-3-[4-(N-morpholinyl)phenyl]-3-phenyl-3H-naphtho[2,1-b]pyran,
6-(N-Morpholinyl)-3-phenyl-3-[4-(N-piperidinyl)phenyl]-3H-naphtho[2,1-b]pyran,
6-(N-Morpholinyl)-3-phenyl-3-[4-(N-pyrrolidinyl)phenyl]-3H-naphtho[2,1-b]pyran,
3-Phenyl-3-(2-fluorphenyl)-3H-naphtho[2,1-b]pyran,
6-(N-Morpholinyl)-3,3-diphenyl-3H-naphtho[2,1-b]pyran
   und
6-(N-Morpholinyl)-3-(4-methoxyphenyl)-3-phenyl-3H-naphtho[2,1-b]pyran
angeführt werden. Jedoch können auch die in US 5,753,146 und EP-A-0 562 915 beschriebenen Pyrane, sowie photochrome Farbstoffe anderer Klassen, beispielsweise Oxazine, wie z.B. die in US 5,753,146 beschriebenen Oxazine, oder Fulgide verwendet werden.

In einer bevorzugten Ausführungsform der vorliegenden Erfindung kann das kontraststeigernde Mittel ein Farbstoff sein, ausgewählt aus der Gruppe, bestehend aus organischen Farbstoffen und Pigmenten, oder als eine reflektierende Beschichtung oder als eine absorbierende Beschichtung ausgebildet sein oder es kann eine Kombination von zwei oder mehreren davon sein.

Wird in einer Ausführungsform ein organischer Farbstoff als kontraststeigerndes Mittel vorgesehen, so kann dieser beispielsweise aus der Gruppe der Azofarbstoffe, der Polymethinfarbstoffe, der Arylmethinfarbstoffe, der Polyenfarbstoffe und Carbonylfarbstoffe ausgewählt werden. Organische Farbstoffe, die im Rahmen der vorliegenden Erfindung als kontraststeigerndes Mittel eingesetzt werden können, das im Bereich des sichtbaren Lichts von 380 nm bis 500 nm entsprechend absorbiert, sind beispielsweise Celliton orange R und Celliton gelb 7GFL, vertrieben von BASF, Resolin brillantgelb PGG, vertrieben von Bayer, Samaron brillantorange GSL, vertrieben von Dystar, ehemals Hoechst, Terasil orange R, vertrieben von Ciba-Geigy, sowie Dorospers orange R der Fa. Dohmen. Fig. 1 zeigt exemplarisch die Transmissionskurve des Farbstoffs Celliton orange R im Kunststoffmaterial CR 39 (Handelsname von Diethylenglykolbisallylcarbonat, vertrieben von PPG Industry).

Wird in einer anderen Ausführungsform ein Pigment als kontraststeigerndes Mittel vorgesehen, so kann das Pigment ein anorganisches oder ein organisches Pigment sein.

In einer weiteren Ausführungsform kann das kontraststeigernde Mittel als eine reflektierende Beschichtung auf dem transparenten Kunststoffmaterial, das darin eingebracht den mindestens einen photochromen Farbstoff enthält, vorgesehen werden. Gemäß der vorliegenden Erfindung unterliegt diese reflektierende Beschichtung keinerlei Beschränkung hinsichtlich des zu verwendenden Materials, solange wie diese reflektierende Beschichtung dergestalt ist, daß der photochrome Kunststoffgegenstand im aufgehellten Zustand des mindestens einen photochromen Farbstoffs eine mittlere Transmission im Bereich des sichtbaren Lichts von 380 nm bis 500 nm von höchstens 30 % zeigt. Eine solche reflektierende Beschichtung ist vorzugsweise in einer Mehrfachschichtenstruktur aufgebaut, wobei Metalloxide wie z.B. SiO₂, ZrO₂, TiO₂, Al₂O₃, HfO₂ und Ta₂O₅ oder Metallfluoride wie z.B. MgF₂ als Materialien verwendet werden können. Beispielsweise kann eine solche reflektierende Beschichtung aus sieben abwechselnden hoch- bzw. niederbrechenden Schichten (7 λ/4-Schichten) aus TiO₂ bzw. SiO₂ und einer λ/2-Schutzschicht aus SiO₂ aufgebaut sein, wobei beispielsweise die λ/4-TiO₂-Schichtdicke 48 nm und die λ/4-SiO₂-Schichtdicke 74 nm und die λ/2-SiO₂-Schutzschichtdicke 148 nm betragen, wenn λ für Licht mit der Wellenlänge von 440 nm steht. Eine derartige reflektierende Beschichtung mit Mehrfachschichtenaufbau kann beispielsweise mittels bekannter PVD-Verfahren erzeugt werden.

In einer weiteren Ausführungsform kann das kontraststeigernde Mittel als eine absorbierende Beschichtung auf dem transparenten Kunststoffmaterial, das darin eingebracht den mindestens einen photochromen Farbstoff enthält, vorgesehen werden. Gemäß der vorliegenden Erfindung unterliegt diese absorbierende Beschichtung keinerlei Beschränkung hinsichtlich des zu verwendenden Materials, solange wie diese absorbierende Beschichtung eine Absorption im Bereich des sichtbaren Lichts von 380 nm bis 500 nm derart aufweist, daß der photochrome Kunststoffgegenstand im aufgehellten Zustand des mindestens einen photochromen Farbstoffs eine mittlere Transmission im Bereich des sichtbaren Lichts von 380 nm bis 500 nm von höchstens 30 % zeigt. Eine solche absorbierende Beschichtung kann beispielsweise aus einem mehrschichtigen Aufbau in der Abfolge TiO₂/SiO₂/TiO₂/SiO₂/... mit einer oder mehreren Metallschichten, wie z.B. Cr, Ag, oder Cu-Schichten, anstelle einer entsprechenden TiO₂ bzw. SiO₂-Schicht sein oder sie kann in der Form einer Einzelschicht aus einer dielektrischen Matrix, wie z.B. SiO₂, mit einem oder mehreren darin eingebrachten Färbemitteln, wie z.B. Mo, WOₓ oder FeOₓ oder ein oder mehrere organische(r) Farbstoff(e), gebildet sein.

Der erfindungsgemäße photochrome Kunststoffgegenstand kann ferner eine oder mehrere die Kratzfestigkeit verbessernde Hartschichten aufweisen. Darüberhinaus können auch auf der dem Licht zugewandten Seite des Kunststoffgegenstands ein oder mehrere herkömmliche Entspiegelungsschichten vorgesehen sein.

Der erfindungsgemäße photochrome Kunststoffgegenstand kann mittels verschiedener Vorgehensweisen hergestellt werden. Prinzipiell können photochrome Kunststoffgläser auf drei unterschiedlichen Wegen hergestellt werden. Zum einen können die photochromen Farbstoffe homogen in der Masse des Kunststoffglases verteilt werden. Alternativ können sie (meist nur konvexseitig) in die Oberfläche des Kunststoffglases unter Anwendung von Wärme durch Diffusion eingebracht werden. Ferner können sie in einer Schicht auf dem Kunststoffglas aufgebracht werden.

Wenn das kontraststeigernde Mittel in der Form eines organischen Farbstoffs vorgesehen ist, so können den Kunststoffmaterialien zusätzlich zu dem mindestens einen photochromen Farbstoff ein oder mehrere organische Farbstoffe, der bzw. die geeignet ist bzw. sind, die kurzwelligen blauen Anteile des einfallenden Lichts zur Steigerung des Kontrasts herauszufiltern, zum einen bereits bei der Herstellung des Kunststoffgegenstands zugegeben werden. Ein solches Massefärbungsverfahren umfaßt beispielsweise das Auflösen oder Dispergieren mindestens einer entsprechenden photochromen Verbindung und mindestens eines organischen Farbstoffs in einem Kunststoffmaterial, z.B. durch die Zugabe der Verbindungen zu einem monomeren Material, bevor die Polymerisation erfolgt. Im Falle der Massefärbung, d.h. der Zugabe der photochromen Farbstoffe und des organischen Farbstoffs als kontraststeigerndes Mittel vor der Polymerisation, können diese dem fertigen Gießharzansatz (Monomere, Initiator, evtl. Zusatzstoffe wie Antioxidantien, UV-Absorber) in einer Konzentration von beispielsweise 0,01 bis 0,1 Gew.-%, vorzugsweise 0,03 bis 0,06 Gew.-%, zugegeben werden, und zwar vorzugsweise im Verhältnis photochrome(r) Farbstoff(e)/organische(r) Farbstoff(e) von 1 bis 10 Gew.-%, bezogen auf das Gewicht des photochromen Farbstoffs.

Zum anderen kann der mindestens eine organische Farbstoff zusammen mit dem mindestens einen photochromen Farbstoff über Diffusion in einem Färbebad in das Kunststoffmaterial eingebracht werden. Bei dieser Vorgehensweise kann jedoch bisweilen eine Verminderung der Photochromie auftreten. Dies kann dadurch umgegangen werden, dass die entsprechende photochrome Verbindung nach dem kontraststeigernden Mittel in Form des organischen Farbstoffs eindiffundiert wird. Für die Herstellung von diffusionsgefärbten Gläsern sind neben der Farbstoffkonzentration auch die speziell verwendete Kunststoffmatrix, die Diffusionsgeschwindigkeit und die Eindringtiefe der Farbstoffe darin entscheidend. Des weiteren sind Färbezeit, Färbetemperatur und die Polymerisationsbedingungen des Kunststoffglases von Bedeutung. Wenn die Durchdringung des oder der Kunststoffmaterialien mit der (den) photochromen Verbindung(en) und dem kontraststeigernden Mittel in Form eines organischen Farbstoffs durch Eintauchen des Kunststoffmaterials in eine heiße Lösung des oder der photochromen Farbstoffe und des kontraststeigernden Mittels oder beispielsweise auch durch ein Thermotransferverfahren durchgeführt wird, sollte jedoch der entsprechende eingesetzte organische Farbstoff in dem Bereich, in welchem der gleichzeitig eingesetzte photochrome Farbstoff ein Absorptionsmaximum aufweist, ein "Absorptionsloch", d.h. die Stelle geringster Absorption, aufweisen. Der Ausdruck "Durchdringung" soll dabei die Migration der photochromen Verbindung(en) und des mindestens einen organischen Farbstoffs als kontraststeigerndes Mittel in das Kunststoffmaterial, z.B. durch den lösungsmittelunterstützten Transfer der photochromen Verbindung(en) in eine Polymermatrix, Dampfphasentransfer oder andere derartige Oberflächendiffusionsvorgänge, bedeuten.

Wird ein Pigment als kontraststeigerndes Mittel vorgesehen, das die kurzwelligen blauen Anteile des einfallenden Lichts zur Steigerung des Kontrasts herausfiltert, so kann dieses vorzugsweise in Form einer separaten Lackschicht auf den erfindungsgemäßen Kunststoffgegenstand aufgebracht werden, und zwar auf der dem Licht abgewandten Seite des Kunststoffgegenstands, um die Eindunkelung und Aufhellung des photochromen Gegenstands nicht zu beeinträchtigen.

Alternativ kann das Aufbringen der photochromen Verbindung(en) und damit des photochromen Effekts auch in Form einer separaten Lackschicht auf das bereits mit einem organischen Farbstoff als kontraststeigerndes Mittel versehenes Kunststoffmaterial erfolgen. Das kontraststeigernde Mittel in der Form eines organischen Farbstoffs oder Pigments kann natürlich auch in einer weiteren Lackschicht auf der der photochromen Lackschicht abgewandten Seite des Kunststoffgegenstands aufgebracht werden. Dies gilt auch für das kontraststeigernde Mittel in Form einer absorbierenden Beschichtung. Wird bzw. werden die photochrome(n) Verbindung(en) als Teil einer auf der Oberfläche des Kunststoffmaterials befindlichen Beschichtung aufgebracht, so richtet sich die Konzentration nach der Dicke der Beschichtung. Beispielsweise haben sich für 20 µm Beschichtungsdicke 2 Gew.-%, für 40 µm 1 Gew.-% als geeignet erwiesen.

Wird das kontraststeigernde Mittel in der Form einer reflektierenden Beschichtung oder einer absorbierenden Beschichtung vorgesehen, so wird diese Beschichtung üblicherweise nachträglich auf das mit mindestens einem photochromen Farbstoff versehene Kunststoffmaterial aufgebracht, wobei optional eine Haftvermittlerschicht vorgesehen werden kann, wie z.B. eine SiO- oder Cr-Schicht, in einer Dikke, welche die optischen Eigenschaften des erfindungsgemäßen Kunststoffgegenstands nicht beeinträchtigt.

Die vorliegende Erfindung wird anhand des folgendes Beispiels näher erläutert.

### Beispiel

Als transparentes photochromes Kunststoffmaterial wurde das Kunststoffglas Perfalit ColorMatic Extra Grey der Fa. Rodenstock eingesetzt. Als kontraststeigerndes Mittel gemäß der vorliegenden Erfindung wurde ein Permanentfarbstoff verwendet, und zwar der Farbstoff "Dorospers orange R", vertrieben von der Fa. Dohmen. Das Glas wurde von der konvexen Seite so abgedeckt, dass von dieser Seite keine Diffusion des Farbstoffs erfolgen konnte. Anschließend wurde das Glas in ein Färbebad gebracht, das den vorgenannten Farbstoff in deionisiertem Wasser unter Verwendung von "Dispergierer BS", vertrieben von der Fa. Dohmen, enthielt (Konzentration: 10 g Farbstoff "Dorospers orange R" und 40 ml "Dispergierer BS" in 5 Liter deionisiertem Wasser; Temperatur: ca. 90°C; Färbezeit: ca. 5 Minuten). Danach wurde die Abdeckung entfernt und das Glas in herkömmlicher Weise gereinigt.

Fig. 3 zeigt die Transmissionskurve des derart erhaltenen phototropen Glases, wobei die Transmission während der Belichtung und der Aufhellung aufgezeichnet wurde. Die Belichtungszeit betrug dabei 15 Minuten, wobei die Bestrahlung mit 50 klux gemäß EN 1836 Punkt 6.1.3.1.1 erfolgte. Die Aufhellung fand im Dunkeln statt. Im Vergleich zu dem in Fig. 2 gezeigten Transmissionsspektrum für ein im Handel erhältliches photochromes bzw. phototropes Kunststoffglas (Rodenstock ColorMatic Extra grey) ohne die erfindungsgemäße Verwendung eines kontraststeigernden Mittels zeigt das in Fig. 3 dargestellte Transmissionsspektrum im Bereich des sichtbaren Lichts von 380 nm bis 500 nm eine drastische Verringerung der mittleren Transmission, was auf einer entsprechenden Absorption des kontraststeigernden Mittels in Form des Permanentfarbstoffs "Dorospers orange R" im Bereich des sichtbaren Lichts von 380 nm bis 500 nm beruht, infolgedessen die kurzwelligen, blauen Anteile des einfallenden Lichts im wesentlichen herausgefiltert werden und damit ein permanent gesteigerter Kontrast resultiert.

## Patentansprüche

1. Photochromer Kunststoffgegenstand, umfassend ein transparentes Kunststoffmaterial und darin eingebracht mindestens einen photochromen Farbstoff, wobei der photochrome Kunststoffgegenstand weiter mindestens ein den Kontrast steigerndes Mittel aufweist, das im Bereich des sichtbaren Lichts von 380 nm bis 500 nm derart absorbiert, daß der photochrome Kunststoffgegenstand im aufgehellten Zustand des mindestens einen photochromen Farbstoffs eine mittlere Transmission im Bereich des sichtbaren Lichts von 380 nm bis 500 nm von mindestens 5 % bis höchstens 30 % zeigt, wobei das den Kontrast steigernde Mittel ein Farbstoff ist, ausgewählt aus der Gruppe, bestehend aus organischen Farbstoffen und Pigmenten, oder als eine reflektierende Beschichtung oder als eine absorbierende Beschichtung ausgebildet ist oder eine Kombination von zwei oder mehreren davon ist.

2. Photochromer Kunststoffgegenstand nach Anspruch 1, wobei der photochrome Kunststoffgegenstand im aufgehellten Zustand des mindestens einen photochromen Farbstoffs eine mittlere Transmission im Bereich des sichtbaren Lichts von 380 nm bis 500 nm bis höchstens 20 %, vorzugsweise höchstens 10% zeigt.

3. Photochromer Kunststoffgegenstand nach Anspruch 1 oder 2, wobei ein organischer Farbstoff, ausgewählt aus der Gruppe der Azofarbstoffe, der Polymethinfarbstoffe, der Arylmethinfarbstoffe, der Polyenfarbstoffe oder Carbonylfarbstoffe, als kontraststeigerndes Mittel vorgesehen ist.

4. Photochromer Kunststoffgegenstand nach Anspruch 1 oder 2, wobei das kontraststeigernde Mittel als eine reflektierende Beschichtung, aufgebaut aus einer Mehrfachschichtenstruktur, wobei Metalloxide, ausgewählt aus SiO₂, ZrO₂, TiO₂ Al₂O₃, HfO₂, Ta₂O₅ oder Metallfluoriden, verwendet werden, auf dem transparenten Kunststoffmaterial vorgesehen ist.

5. Photochromer Kunststoffgegenstand nach Anspruch 1 oder 2, wobei das kontraststeigernde Mittel als eine absorbierende Beschichtung, aufgebaut aus einem mehrschichtigen Aufbau in der Abfolge TiO₂/SiO₂/TiO₂/SiO₂/... mit einer oder mehreren Metallschichten, ausgewählt aus Cr-, Ag- oder Cu-Schichten, anstelle einer entsprechenden TiO₂ bzw. SiO₂-Schicht, oder in der Form einer Einzelschicht aus einer dielektrischen Matrix mit einem oder mehreren darin eingebrachten Färbemitteln, ausgewählt aus Mo, WOₓ oder FeOₓ oder einem oder mehreren organischen Farbstoff(e), auf dem transparenten Kunststoffmaterial vorgesehen ist.

## Claims

1. Photochromic plastic material object, comprising a transparent plastic material and at least one photochromic colourant introduced therein, the photochromic plastic material object having in addition at least one means increasing the contrast which is absorbent in the range of visible light of 380 nm to 500 nm in such a manner that the photochromic plastic material object in the lightened state of the at least one photochromic colourant shows an average transmission in the range of visible light of 380 nm to 500 nm of at least 5% to at most 30%, the means increasing the contrast being a colourant, selected from the group comprising organic colourants and pigments or being configured as a reflective coating or as an absorbing coating or being a combination of two or more thereof.

2. Photochromic plastic material object according to claim 1, the photochromic plastic material object in the lightened state of the at least one photochromic colourant showing an average transmission in the range of visible light in the 380 nm to 500 nm up to at most 20%, preferably at most 10%.

3. Photochromic plastic material object according to claim 1 or 2, an organic colourant, selected from the group of azo colourants, polymethine colourants, arylmethine colourants, polyene colourants or carbonyl colourants, being provided as contrast-increasing means.

4. Photochromic plastic material object according to claim 1 or 2, the contrast-increasing means being provided on the transparent plastic material as a reflective coating, constructed from a multilayer structure, metal oxides being used, selected from SiO₂, ZrO₂, TiO₂, Al₂O₃, HfO₂, Ta₂O₅ or metal fluorides.

5. Photochromic plastic material object according to claim 1 or 2, the contrast-increasing means being provided on the transparent plastic material as an absorbing coating, constructed from a multilayer construction in the sequence TiO₂/SiO₂/TiO₂/SiO₂/... with one or more metal layers selected from Cr, Ag or Cu layers, instead of a corresponding TiO₂ or SiO₂ layer, or in the form of a single layer comprising a dielectric matrix with one or more colourants introduced therein, selected from Mo, WOₓ or FeOₓ or one or more organic colourant(s).

## Revendications

1. Objet en plastique photochrome, comprenant une matière plastique transparente et, intégré dans celle-ci, au moins un colorant photochrome, l'objet en plastique photochrome présentant en outre au moins un agent de renforcement du contraste qui est absorbé dans le domaine de la lumière visible de 380 nm à 500 nm de telle sorte que l'objet en plastique photochrome présente à l'état éclairci d'au moins un colorant photochrome, une transmission moyenne dans le domaine de la lumière visible de 380 nm à 500 nm, d'au moins 5 % à au plus 30 %, l'agent de renforcement du contraste étant un colorant choisi dans le groupe comprenant les colorants et pigments organiques ou est constitué en une couche réfléchissante ou en une couche absorbante ou est une combinaison de deux ou de plusieurs de celles-ci.

2. Objet en plastique photochrome selon la revendication 1, dans lequel l'objet en plastique photochrome présente à l'état éclairci d'au moins un colorant photochrome, une transmission moyenne dans le domaine de la lumière visible de 380 nm à 500 nm jusqu'à 20 % au maximum, de préférence, 10 % au maximum.

3. Objet en plastique photochrome selon la revendication 1 ou 2, dans lequel un colorant organique choisi dans le groupe des colorants azo, des colorants polyméthine, des colorants arylméthyne, des colorants polyène ou des colorants carbonyle, comme agent de renforcement du contraste est prévu.

4. Objet en plastique photochrome selon la revendication 1 ou 2, dans lequel l'agent de renforcement du contraste est utilisé comme un revêtement réfléchissant, constitué d'une structure à couches multiples, dans laquelle des oxydes métalliques choisis parmi les SiO₂, ZrO₂, TiO₂, Al₂O₃, HfO₂, Ta₂O₅ ou les fluorures métalliques sont prévus sur le matériau en plastique transparent.

5. Objet en plastique photochrome selon la revendication 1 ou 2, dans lequel l'agent de renforcement du contraste est prévu comme revêtement absorbant, constitué d'une structure à couches multiples dans la disposition TiO₂/SiO₂/TiO₂/SiO₂/...comportant une ou plusieurs couches métalliques choisies parmi les couches de Cr, Ag ou Cu au lieu d'une couche de TiO₂ ou de SiO₂ correspondante ou sous la forme d'une couche individuelle d'une matrice diélectrique avec un ou plusieurs colorants inclus dans celle-ci, choisis parmi Mo, WOₓ ou FeOₓ ou un ou plusieurs colorant(s) organique(s), sur le matériau en plastique transparent.
